# EUROPEAN PATENT APPLICATION

(11) **EP 1 990 399 A1**
(43) Date of publication of application: **12.11.2008**
(21) Application number: 07118970.8
(22) Date of filing: 22.10.2007
(51) Int. Cl.: C10L 5/44, F23K 1/00

(54) **Method for the treatment of the empty fruit bunch (EFB) material of palm oil trees, particulate torrefied EFB product and use of such product as auxiliary fuel in a power plant**

(71) Applicant: Cox, Constantijn W.H.H., 7255 CE Hengelo (NL)
(72) Inventor: Cox, Constantijn W.H.H., 7255 CE Hengelo (NL)
(74) Representative: Swinkels, Bart Willem

(57) **Abstract**

The invention provides a method for the treatment of the empty fruit bunch (EFB) material of palm oil trees comprising (a) an optional pretreatment of the EFB material thereby forming an optionally pretreated EFB material, and (b) torrefying the optionally pretreated EFB material thereby forming a torrefied EFB product. The invention further provides a particulate torrefied EFB product comprising pellets with a bulk density of 0.75-0.90 kg/l, a carbon content in the range of at least about 50 wt.% relative to the total weight of the particulate torrefied EFB product, and a caloric value in the range of 20-26 MJ/kg.

## Description

### Field of the invention

The invention relates to a method for the treatment of the empty fruit bunch (EFB) material of palm oil trees and to a particulate torrefied EFB product obtainable by such method.

### Background of the invention

In view of the depletion of energy, there is a constant search to renewables and alternative energy (re)sources. Alternative energy sources are for instance based on biomass or waste. There are a large amount of different types of biomass and wastes and there are also a plurality of methods for obtaining energy from such biomass or wastes, varying from combustion or partial combustion, microbiological treatment, etc. It is not always clear, which process and which type of biomass or waste, and especially which combination of process and biomass or waste provides an energy efficient generation of energy or renewables.

An example of the treatment of biomass is disclosed in WO 2007/078199, which describes a process for treating biomass comprising the provision of a material that contains an amount of residual moisture. The material is heated to a torrefying temperature in an anaerobic atmosphere in the torrefaction reactor, the material being converted into a torrefied material. The material with the contained residual moisture is essentially fully dried in a drying chamber by evaporation of residual moisture. The torrefaction reactor comprises a torrefying chamber, in which the torrefaction of this dried material is essentially carried out. The material is conveyed through the torrefaction reactor in a transport direction. The drying of the material in the drying chamber is carried out by introducing into it a hot drying gas that flows through the drying chamber in co-current with the material. The torrefaction of the material in the torrefying chamber of the torrefaction reactor is carried out by introducing into it a hot torrefying gas that flows through the torrefying chamber of the torrefaction reactor in counter-current with the material.

Another example is disclosed in US 4306506, which describes an apparatus for the conversion of solid fuels and solid organic waste materials by high temperature gasification into gaseous fuel called "producer gas". The apparatus comprises a stacked two-section gasifier defining sequentially descending drying, distillation, oxidation and reduction reaction zones through which a column of the solid fuel descends during its conversion to the gaseous fuel. The lower reactor section is of double-shell construction and defines the lower oxidation and reduction reaction zones. Means are provided for drawing air into the oxidation zone for burning reaction with carbonized fuel passing there through and for thereafter drawing reaction gases downwardly through the lower reduction zone of the gasifier and then through the annular space defined by the double-shell structure of the lower section in indirect counter-current heat exchange relationship with the fuel column portion in the oxidation and reduction zones. The inner shell element of the lower section is arranged in hanging manner within its associated outer shell element to allow expansion of the double-shell structure under the high temperature conditions experienced by the gasifier without harmful stress build-up in the apparatus. The inner shell element supports within its lower portion two stacked funnel-shaped transition pieces which form a series of throat-like constrictions for supporting the fuel column in the gasifier and which cause localized increase in the velocity of the gases passing downwardly there through and leaving the reduction zone of the reactor.

### Summary of the invention

It is an object of the invention to provide an alternative process for the production of a "2^{nd} generation" high caloric solid biomass product, that can especially as auxiliary fuel, be used in power plants, especially coal fired power plants. Such high caloric biomass product preferably maintains its high caloric value (especially due to the fact that it is hydrophobic), preferably maintains the about 40-41% energy efficiency rates at coal fired power plants by delivering high quality steam and can preferably easily be grounded to dust.

It has surprisingly be found that the combination of a torrefaction process and the use of palm oil tree products, such as the palm oil tree itself and the empty fruit bunch (EFB) provides an alternative product that can be used in such plants, especially because of its advantageous properties and the advantageous relative easy and cost and energy efficient way such product can be made. Especially, the use of the empty fruit bunch (EFB) material seems advantageous.

According to a first aspect of the invention, a method for the treatment of a palm oil tree product, especially the empty fruit bunch (EFB) material of palm oil trees, is provided, comprising:
a. an optional pretreatment of the palm oil tree product t hereby forming an optionally pretreated palm oil tree product;
b. torrefying the optionally pretreated palm oil tree product thereby forming a torrefied palm oil tree product.

According to another aspect, the invention provides a particulate torrefied EFB product comprising pellets with a bulk density of about 0.70-0.90 kg/l, preferably a carbon content in the range of at least about 50 wt.% relative to the total weight of the particulate torrefied EFB product, and a caloric value in the range of about 20-26 MJ/kg. In a specific embodiment, the invention provides a particulate torrefied EFB product having a bulk density of 0.8-0.85 kg/l, preferably a carbon content in the range of 55-60 wt.% relative to the total weight of the torrefied EFB product, and a caloric value in the range of 22-24 MJ/kg.

The product obtainable according to the method of the invention and as described above may especially be used in a power plant, especially a coal fired power plant.

Hence, according to yet another aspect of the invention, there is provided the use of a particulate torrefied EFB product according to the invention, as auxiliary fuel in a power plant, especially in a coal fired power plant.

It surprisingly appears that in a relative easy way with a relative low amount of energy a product can be obtained which is suitable for use in a power plant, which can therein used as auxiliary fuel. The product can easily be ground to dust (for instance together with the coal), in order to feed the power pant in its most efficient and effective way. A good energy balance, a suitable density, a very suitable caloric value, etc., are obtainable with the method of the invention. Some of these characteristics might also be obtainable with some other methods and/or other biomass starting material, but not as efficiently produced as with EFB as starting material.

### Description of preferred embodiments

Herein, the term "palm oil tree product" refers to the palm oil tree itself, including its roots, trunk, branches, palm oil, and the empty fruit bunch (EFB). The term "palm oil tree product" especially refers to the palm oil tree itself, such as its roots, its trunk, its branches, or the empty fruit bunch (EFB), but especially refers to the empty fruit bunch (EFB) material of palm oil trees. Combinations of two or more palm oil tree products may also be applied as palm oil tree product in the method of the invention. The term "empty fruit bunch" is known in the art and especially refers to the empty bunch that is left over after the palm oil nuts have been taken out. The bunch itself substantially consists of fibers. The palm oil tree product, and herein especially the empty fruit bunch EFB, are also indicated "starting material". When using EFB material as starting material, this material is herein also indicated as "EFB starting material" or "EFB". Herein, "EFB" is also indicated as "EFB material". In a preferred embodiment, EFB material is used as palm oil tree product.

Below, the invention is further elucidated with referral to EFB material as starting material and torrefied EFB material as torrefied starting material, but the description below also relates to the torrefication of palm oil tree products in general, especially its roots, its trunk, its branches, and of course the empty fruit bunch (EFB).

In a specific embodiment, the invention provides a method for the treatment of the empty fruit bunch (EFB) material of palm oil trees comprising:
a. an optional pretreatment of the EFB material thereby forming an optionally pretreated EFB material;
b. torrefying the optionally pretreated EFB material thereby forming a torrefied EFB product.

In an embodiment, the pretreatment comprises reducing the potassium content in the EFB material to less than about 1 g/kg EFB material, more especially reducing the potassium content in the EFB material to less than about 0.5 g/kg EFB material. Whereas the EFB material not pretreated may have potassium content above about 5 g/kg, the pretreated material may have a potassium content of about 0.02-1 g/kg, such as about 0.05-0.5 g/kg. The potassium amount may be estimated with methods known in the art (for instance by using 1:1.5 vv extraction with water). A low potassium content is advantageous in view of application in a power plant, especially a coal fired power plant, where high potassium fuel may lead to undesired slacking. In a specific embodiment, the pretreatment comprises washing the EFB material with water. The optional preatreatment the EFB material may also comprise shredding the empty fruit bunches. In another specific embodiment, the pretreatment comprises shredding the empty fruit brunches (to obtain the EFB fibers as half fabricate), pressing the EFB fibers, and one or more washing steps (with water) (especially 2-4 washing steps, such as 2 washing steps). When pretreating the starting material, also the content of other non-organic compounds or elements may be reduced. When referring to the EFB material, in an embodiment this includes pretreated EFB material (i.e. EFB material that is subjected to the optional pretreatment).

Torrefaction is a thermochemical treatment method for material, such as solid biomass. In the method of the invention, the starting material is heated in an anaerobic or oxygen-free gaseous atmosphere, usually under overpressure to a temperature of about 220-320 °C. The lack of oxygen prevents the material from burning. Instead the material is torrefied, which leads to loss of mass because of the elimination of gases. This loss of mass generally amounts to about 30%, while the energy value is only reduced by about 10%. The fuel produced by torrefaction therefore has a higher calorific value.

In a specific embodiment, the method comprises torrefying at a temperature in the range of about 220-320 °C, more especially at a temperature in the range of about 240-300 °C, even more especially in the range of about 240-280 °C. During torrefying, the temperature may be varied (within the temperature range indicated). When torrefying EFB, it advantageously appears that within about an hour a good and homogeneous torrefied product is obtained, whereas wood, such as the frequently used pine wood (such as Canadian pine wood) provides in a comparable time an inferior torrefied product, which is not homogeneously torrefied.

After torrefying, preferably a product is obtained with a carbon content in the range of about at least about 50 wt.%. Hence, in a specific embodiment, the method of the invention comprises torrefying until a carbon content is obtained in the range of at least about 50 wt.% relative to the total weight of the torrefied EFB product, especially about 50-65 wt.%, more especially in the range of about 55-60 wt.% (such as about 57 wt.%), relative to the total weight of the torrefied EFB product. The organic content or organic matter content of the end product, i.e. the torrefied (optionally pretreated) starting material, such as the torrefied (optionally pretreated) EFB material, is especially in the range of about 95-99.5 wt.%, more especially in the range of about 95-99 wt.%, even more especially in the range of about 96-98 wt.%, such as 97 wt.%, relative to the total weight of the torrefied EFB product. The time at which the starting material, especially EFB, is torrefied, i.e. heated under anaerobic conditions at about 220-320 °C is especially about 5-60 minutes, more especially about 10-40 minutes, even more especially about 15-20 minutes. When torrefying at about 240-280 °C, a torrefying time of about 15-20 minutes may suffice. At such relative short times, in general wood would not provide an equal good product

Advantageously, a product is obtained with a caloric value in the range of about 20-26 MJ/kg, which appears to be a product that is in general more cost and energy efficiently produced than torrefied wood, and its product characteristics are advantageously very close to coal. Hence, in a specific embodiment, the method of the invention comprises torrefying until a caloric value of the torrefied EFB product is obtained in the range of about 20-26 MJ/kg, more especially in the range of about 22-24 MJ/kg. It appears that in general all relevant properties of the torrefied EFB product are more cost and energy efficiently produced than those of torrefied wood, such as torrefied Canadian pine wood (see also Experimental part).

After having torrefied, a suitable product is obtained, but preferably, the torrefied product is further condensed. Condensing the torrefied product may be done by amongst others pelletizing and/ or briquetting. Hence, in an embodiment, the method further comprises:
c. forming a particulate torrefied EFB product.

More especially, condensing, such as by pelletizing and/ or briquetting, is performed until a bulk density of about 0.70-0.90 kg/l is obtained. Hence, in a specific embodiment, the method of the invention further comprises forming a particulate torrefied EFB product with a bulk density of about 0.70-0.90 kg/l, more especially about 0.75-0.90 kg/l, more especially a particulate torrefied EFB product with a bulk density of about 0.75-0.85, even more especially 0.8-0.85 kg/l. The particulate product may in an embodiment consist of torrefied (EFB) product particles wherein in the range of about 50-100 wt.%, such as in the range of about 60-95 wt.%, especially in the range of about 80-100 wt.%, such as in the range of about 85-95 wt.%, more especially in the range of about 95-100 wt.%, of the torrefied (EFB) particles, relative to the total amount of particulate torrefied (EFB) product, have a particle size in the range of 0.3-5 cm, especially in the range of 0.5-2.5 cm. For instance, particles of the particulate product may have a cylindrical shape with a diameter of about 0.3-0.7 mm and a length in the range of about 1-2.5 cm.

Before condensing the torrefied product, optionally the product may be cooled to temperatures in the range of about 0-50 °C, especially to room temperature. To that end, in an embodiment, prior to forming a particulate torrefied EFB product, the torrefied EFB product is cooled to a temperature in the range of about 0-50 °C, especially to about 15-40 °C.

The method of the invention advantageously provides a particulate torrefied EFB product comprising pellets with a bulk density of about 0.70-0.90 kg/l, a carbon content in the range of at least about 50 wt.% relative to the total weight of the particulate torrefied EFB product, and a caloric value in the range of about 20-26 MJ/kg. Such product may in an embodiment have an ash content of about 2.5-5 wt.%, relative to the total weight of the particulate torrefied EFB product. Especially, the particulate torrefied EFB product may have a bulk density of about 0.8-0.85 kg/l. In another specific embodiment, the particulate torrefied EFB product has a carbon content of about 50-65 wt.%, more especially in the range of about 55-60 wt.% relative to the total weight of the torrefied EFB product. In yet a further embodiment, the particulate torrefied EFB product has a caloric value in the range of about 22-24 MJ/kg.

Hence, in a specific embodiment, the invention provides a particulate torrefied EFB product having a bulk density of 0.8-0.85 kg/l, a carbon content in the range of 55-60 wt.% relative to the total weight of the torrefied EFB product, and a caloric value in the range of 22-24 MJ/kg.

The organic content or organic matter content of the torrefied EFB material, is especially in the range of about 95-99.5 wt.%, more especially in the range of about 95-99 wt.%, even more especially in the range of about 96-98 wt, relative to the total weight of the torrefied EFB product.

The particulate torrefied EFB product according to the invention, especially obtainable according to the method of the invention, may especially be used in power plants. More especially, the torrefied EFB product may be used in coal fired power plants. In particular, in addition to conventional fuels such as coal, the particulate torrefied EFB may be used, optionally after a combustion pretreatment step, such as crushing the particles. Hence, the invention also provides the use of the particulate torrefied EFB product as auxiliary fuel in a power plant, especially a coal fired power plant (and thus in addition to coal). In general, coal fired power plants produce electricity by burning coal in a boiler to heat water to produce steam.

In general, the caloric value of torrefied biomass may be tuned to the desired value, and can for instance be designed to be in the range of about 20-26 MJ/kg, as also described herein. Depending upon the temperature and torrefying time, the caloric value can be chosen. In general, the larger the torrefying time, the higher the caloric value, but also the more mass of the starting material is converted. Generally, the higher the caloric value of the starting material, the less mass is desirably lost. It advantageously appears that especially EFB material as starting material is relatively easily and homogeneously torrefyable.

For other biomass, such as wood, the torrefying time is much longer when an about equal product (in view of caloric value) has to be obtained. In relation to for instance grass, hay, sugar cane, etc., EFB has a number of advantages, such as (a) a relatively high relative density (in the order of about 360-400 kg/m³, such as about 380 kg/m³), (b) a relative high organic content and (c) a relative low amount of minerals. The advantages thereof are a better controllable process (the starting material is less likely to swirl around in a torrefying reactor), relatively less mass starting material is needed to obtain a predetermined torrefied product, and in coal based power plants, advantageously less corrosion and slagging may occur.

The torrefied product according to the invention surprisingly is very suitable to be used in coal fired power plants because it is very similar to coal, especially with respect to its caloric value. Further, the condensed torrefied EFB material (especially the particulate torrefied EFB product) can advantageously together with coal be crushed and fed to the power plant, whereas for instance the use of wood pellets lead to problems with respect to caloric value and crushing.

### Examples

### Pretreatment

In the table below, the influence of a washing step as pretreatment is indicated. Washing has been performed in water with a plurality of washing steps. The following procedure was performed:
- Shredding the empty fruit brunches (to obtain the EFB fibers as half fabricate)
- Pressing the EFB fibers
- One or more washing steps (with water).

| | non pretreated EFB materiaal | Pretreated EFB material |
|---|---|---|
| | (g/kg) | (g/kg) |
| K | 5.68 | 0.47 |
| Na | 0.12 | 0.15 |
| Ca | 0.21 | 0.11 |
| Mg | 0.13 | 0.03 |
| NO₃ | 0.17 | 0.25 |
| Cl | 1.85 | 0.19 |
| SO₄ | 0.77 | 0.13 |
| HCO₃ | 2.44 | 0.08 |
| P | 0.14 | 0.02 |
| Organic matter | 96-97% | 97-98% |
| Ash | 3-4% | 2-3% |

Further, pretreated and non-pretreated material were torrefied with the following process parameters:
- optional pretreatment as described above, to obtain the pretreated EFB material as described above;
- torrefying at about 240-280 °C for about 15-20 minutes under anaerobic conditions at over pressure (for instance about 1.05-5 bar); and
- condensing the product into a particulate product.

### Comparison with other (renewable) energy sources

Examples of the product of the invention were compared with coal and wood pellets. The following results were obtained:

| Parameters | Coal | Wood pellets | Product of the invention (pretreated)(condensed) |
|---|---|---|---|
| Caloric value (MJ/kg) | 25-25 | 16-17 | 23-25 |
| Bulk density (kg/m³) | 800-900 | 500-650 | 750-850 |
| Energy density (GJ/m³) | 20-22.5 | 7.8-10.5 | 16-18.5 |
| Grinding costs (relative) | 3 | 12-25 | 1 |
| CO₂ output (T/T input) | 2.514 | 0 | 0 |
| Ash content (%) | 8-10 | <1 | 1-3 |
| Sustainable fuel | No | Yes | Yes |
| Characteristics | Hydrophobic | Hydrophilic | Hydrophobic |

Compared to wood, the product of the invention (obtainable via the method of the invention) has a number of advantages. Due to the physical characteristics of EFB, it appears that (a) EFB has a mass of approx. 380 kg/m³, (b) EFB is a very airy material and (c) that the fibres themselves have a very limited water holding capacity. Because of the high percentage of pores (91 %) and the strength of the fibers, the steam (used in the torrefaction reactor) can easily access (due to the pores) all EFB fibres without burning the fibres immediately (due to the strength of the fibres). A big advantage is that all material is relatively fast, cost efficiently and easily equally/ homogeneously torrefied, and therefore results in a balanced/ stable/ homogeneous end quality. Another advantage is that the retention time of the EFB fibres in the reactor may significantly be shorter (such as to about 2 to 3 times shorter) compared to wood, and therefore less energy needs to be added to torrefy the material. Wood has indeed more mass, but its structure is definitively not airy.

Compared to other agri residues (e.g. grass), the product also has advantages. The EFB has a higher organic content and contains a relatively low amount of minerals. During the torrefaction process EFB has therefore less losses with regards to mass, making it a more interesting material than other agri residues. Due to the fact that EFB contains relatively very little minerals, the occurrence of corrosion and slagging at coal fired power plants is reduced. The occurrence of corrosion and slagging could even be more reduced by pretreating the EFB in such a way that the potassium content (K) can for instance be reduced from 5.68 g/kg to 0.47 g/kg.

Due to the relative high bulk density of EFB compared to other alternative biomass, such as grass, sugar cane, etc. (note: more mass into the torrefaction reactor in general prevails above less mass, since the process may then be better controllable), the airy structure of EFB and the strength of the fibres, the material is perfectly suited for torrefaction. The result is a very homogeneous end torrefied product that is processed most efficiently.

It should be noted that the above-mentioned embodiments illustrate rather than limit the invention and that those skilled in the art will be able to design many alternative embodiments without departing from the scope of the appended claims. Use of the verb "to comprise" and its conjugations does not exclude the presence of elements or steps other than those stated in a claim. The article "a" or "an" preceding an element does not exclude the presence of a plurality of such elements. In the device claim enumerating several means several of these means may be embodied by one and the same item of hardware. The mere fact that certain measures are recited in mutually different dependent claims does not indicate that a combination of these measures cannot be used to advantage.

## Claims

1. A method for the treatment of the empty fruit bunch (EFB) material of palm oil trees comprising:
a. an optional pretreatment of the EFB material thereby forming an optionally pretreated EFB material;
b. torrefying the optionally pretreated EFB material thereby forming a torrefied EFB product.

2. The method according to claim 1, wherein the pretreatment comprises reducing the potassium content in the EFB material to less than 1 g/kg EFB material.

3. The method according to anyone of the preceding claims, wherein the pretreatment comprises washing the EFB material with water.

4. The method according to anyone of the preceding claims, comprising torrefying at a temperature in the range of 240-280 °C.

5. The method according to anyone of the preceding claims, comprising torrefying until a caloric value of the torrefied EFB product is obtained in the range of 22-24 MJ/kg.

6. The method according to anyone of the preceding claims, further comprising
c. forming a particulate torrefied EFB product.

7. The method according to any one of, further comprising forming a particulate torrefied EFB product with a bulk density of 0.8-0.85 kg/l.

8. A particulate torrefied EFB product comprising pellets with a bulk density of 0.75-0.90 kg/l, a carbon content in the range of at least 50 wt.% relative to the total weight of the particulate torrefied EFB product, and a caloric value in the range of 20-26 MJ/kg.

9. The particulate torrefied EFB product according to claim 8, having a bulk density of 0.8-0.85 kg/l, a carbon content in the range of 55-60 wt.% relative to the total weight of the torrefied EFB product, and a caloric value in the range of 22-24 MJ/kg.

10. Use of a particulate torrefied EFB product according to any one of claims 8-9 or obtainable according to the method according to any one of claims 1-7 as auxiliary fuel in a coal fired power plant.
